Europäisches Patentamt

(19) European Patent Office

Office européen des brevets

(11) Numéro de publication: **0 167 195**
**B1**

(12) **FASCICULE DE BREVET EUROPEEN**

(45) Date de publication du fascicule du brevet: **12.12.90**

(51) Int. Cl.⁵: **B 60 B 30/06**, B 60 C 25/01

(21) Numéro de dépôt: **85200898.6**

(22) Date de dépôt: **07.06.85**

(54) Mécanisme pour la fixation d'une roue dans un dispositif pour le montage et le démontage d'un pneu sur et d'une jante de roue.

(30) Priorité: **29.06.84 BE 2060445**

(43) Date de publication de la demande:
**08.01.86 Bulletin 86/02**

(45) Mention de la délivrance du brevet:
**12.12.90 Bulletin 90/50**

(84) Etats contractants désignés:
**CH DE FR GB IT LI NL SE**

(56) Documents cités:
**BE-A- 689 169**
**CH-A- 473 695**
**FR-A-1 567 801**
**US-A-1 402 471**

(73) Titulaire: **du Quesne, Francis**
**Kleistraat 138**
**B-2630 Aartselaar (BE)**

(72) Inventeur: **du Quesne, Francis**
**Kleistraat 138**
**B-2630 Aartselaar (BE)**

(74) Mandataire: **Ottelohe, Jozef René**
**Bureau Ottelohe J.R. Postbus 3 Fruithoflaan 105**
**B-2600 Antwerpen (Berchem) (BE)**

Courier Press, Leamington Spa, England.

## Description

L'invention concerne un mécanisme pour la fixation d'une roue dans un dispositif pour le montage et le démontage d'un pneu sur et d'une jante de roue, lequel mécanisme a une table tournant autour d'un arbre et sur laquelle la roue est fixée au moyen de griffes déplaçables vers la roue, ces griffes sont fixées sur plusieurs crémaillères qui sont engagées dans une roue dentée solidaire de l'arbre susdit et commandée en rotation. Au-dessus de la table, un bras avec outillage pour le montage et le démontage d'un pneu sur ou de la roue est disposé d'une façon connue.

Un semblable mecanisme, correspondent au préamble de la revendication 1, est connu, auquel il est fait usage de trois ou quatre crémaillères situés sur un même plan et commandées en déplacement linéaire et tangentiel par une roue dentée tournante, l'extrémité extérieure de chaque crémaillère étant pourvue d'une griffe pour la fixation de la roue.

Un important inconvénient de ce mécanisme est que par la disposition des crémaillères sur un même niveau, la course de chacune d'elles est limitée, ce qui limité par conséquent le diamètre des différentes roues à fixer. Un autre inconvénient est le déplacement tangentiel des crémaillères et donc le déplacement oblique des griffes de fixation par rapport à la roue, d'où il résulte un ajustement imparfait de la roue dans le galbe des griffes et un endommagement possible de la roue.

Le mécanisme conforme à l'invention vise à obvier à ces inconvénients. A cette fin, ce mécanisme se compose principalement des éléments et arrangements décrits dans la revendication 1.

Grâce à ce mécanisme, une très grande variation entre la plus petite et la plus grande roue à fixer devient possible et un déplacement radial rapide et efficace des griffes vers le centre de l'arbre de rotation de la table est obtenu, par quoi la roue à fixer s'ajuste bien dans le galbe des griffes, de sorte qu'un meilleur centrage et une meilleure fixation de la roue sur la table est obtenu sans risque d'endommager la roue. En outre, grâce à cette construction relativement simple et bon marché, aucune saleté ne peut se déposer sur les éléments de commande du mécanisme.

A titre d'exemple et sans impliquer aucun caractère limitatif, il est donné ci-après une description détaillée d'une forme d'exécution préférée du mécanisme conforme à l'invention.

Cette description se réfère aux dessins annexés, dans lesquels:

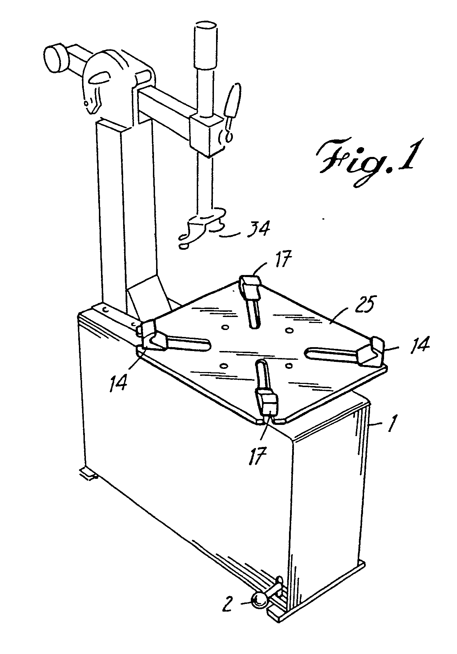

la fig. 1 représente une vue en perspective d'un dispositif pour le montage et le démontage de pneus, pourvu du mécanisme conforme à l'invention;

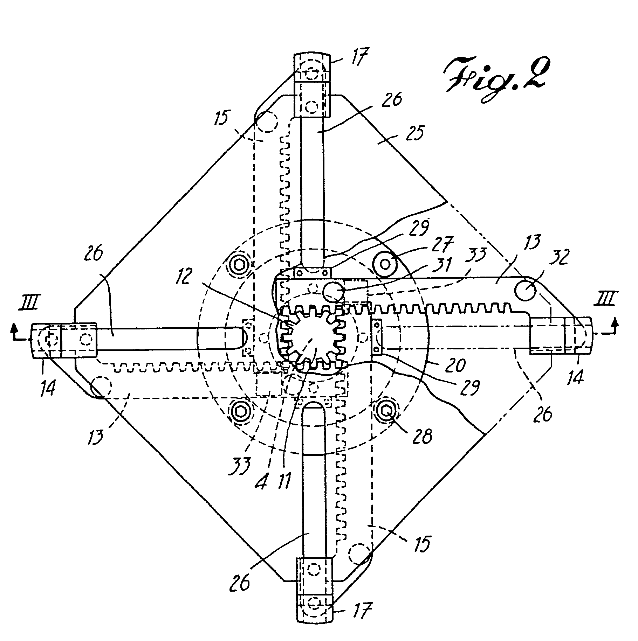

la fig. 2 est une vue en plan avec partie coupée, du mécanisme conforme à l'invention;

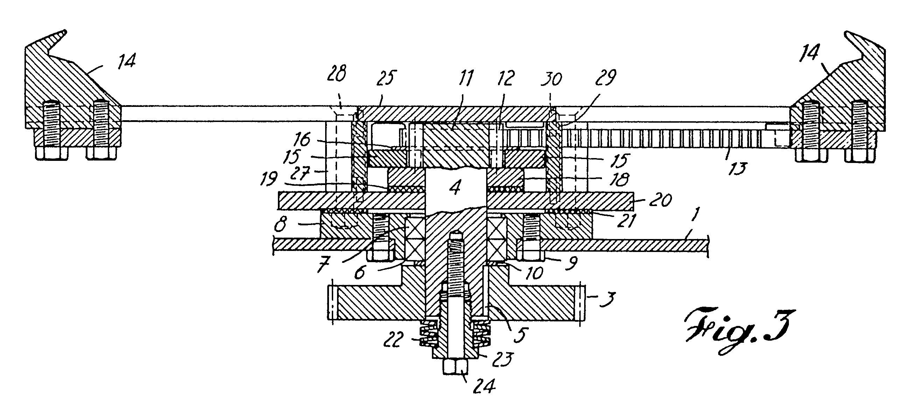

la fig. 3 en représente, à échelle agrandie, une coupe longitudinale suivant la ligne III-III de la fig. 2.

Ce dispositif comporte une caisse 1 dans laquelle il est logé un moto-réducteur (non représenté) qui peut tourner dans les deux sens, suivant la position dans laquelle on pousse la pédale 2. Le moto-réducteur entraîne une roue dentée 3 qui se trouve montée sur un arbre 4 par l'intermédiaire d'une clavette 5. L'arbre 4 peut coulisser axialement dans des roulements à billes 6-7 montés dans un collet 8 fixé sur la caisse 1 au moyen de boulons 9. Entre la roue dentée 3 et le roulement à billes 6 il est prévu une rondelle 10. De l'extrémité supérieure 11 de l'arbre 4 fait partie un pignon 12. Le niveau supérieur du pignon 12 s'engrène dans deux crémaillères 13 parallèles et diamétralement opposées, dont chaque extrémité extérieure est courbée et pourvue d'une griffe 14, de sorte que l'axe de déplacement de chaque griffe soit parallèle à sa crémaillère respective et passe par le centre du pignon 12. Les deux griffes 14 se déplacent donc l'une vers l'autre sur un même diamètre pendant le déplacement parallèle des crémaillères 13. Le niveau inférieur du pignon 12 s'engrène également dans deux crémaillères 15 placées de la même manière que les crémaillères 13 par rapport au pignon 12. Le niveau des crémaillères 15 est séparé par l'anneau 16 du niveau des crémaillères 13. Les crémaillères 15 sont pourvues de griffes 17 et l'axe de déplacement de celles-ci est perpendiculaire à celui des griffes 14.

Afin de combler la différence de niveau entre les crémaillères 13 et les crémaillères 15, il est prévu sur ces dernières des entretoises (non représentées), de sorte que les quatre griffes 14-17 se trouvent dans un même plan. Les deux crémaillères inférieures 15 sont déplaçables sur un disque-porteur 18 solidaire de l'arbre 4, ledit disque-porteur 18 reposant par l'intermédiaire d'un disque de friction 19 sur un disque de glissement 20 monté autour de l'arbre 4, lequel disque de glissement 20 est supporté par le collet 8 par l'intermédiaire d'un deuxième disque de friction 21. Une pression souhaitée peut être obtenu entre le disque-porteur 18, le disque de friction 19, le disque de glissement 20, le disque de friction 21, le collet 8 et la roue dentée 3, par la compression de rondelles ressorts 22 montées autour d'un boulon de pression 23 vissé dans l'arbre 4. Afin de bloquer ce boulon 23 dans une position donnée, il est prévu une vis de blocage 24 vissée elle aussi dans l'arbre 4 et passant dans un perçage et au travers du boulon de pression 23. Le tout est recouvert d'une table carrée à coins coupés 25, qui est pourvue en diagonale de quatre rainures 26 dans lesquelles les griffes 14-17 coulissent radialement. Ladite table 25 est supportée par quatre montants 27 et fixée au disque de glissement 20 au moyen de boulons 28 noyés dans la table. Le serrage des disques de friction 19-21 et des disques 18-20, par l'intermédiaire du boulon de pression 23 et des rondelles ressorts 22 est nécessaire pour immobiliser la table 25 quand l'arbre 4 est mis en rotation, et ce jusqu'à ce que les griffes 14-17 agrippent la roue à fixer, après quoi l'ensemble table et roue est entraîné en rotation. Il est encore prévu entre la table 25 et le disque de glissement 20 pour guider chacune des crémaillères 13-15, pendant leur déplacement, des guides 29. Ces guides 29 sont fixés au moyen de goupilles 30 à la table 25 et au disque de glissement 20. Afin de limiter la course des crémaillères 13-15 dans les deux directions, les crémaillères 13 sont pourvues chacune de deux erdots 31-32 qui agissent de concert avec une butée 33 fixée sous la table 25.

Pour la fixation d'une roue, on pose celle-ci sur la table 25 entre les griffes 14-17 et on met le moto-réducteur électrique (non-représenté) en marche au moyen de la pédale 2. La roue dentée 3 entraîne ainsi en rotation l'arbre 4 et le pignon 12. Ce dernier déplace en ligne droite et tangentielle les crémaillères 13-15, ce qui a pour effet le déplacement radial des quatre griffes 14-17 en direction de la roue jusqu'au serrage ferme de celle-ci. Les griffes 14-17 ainsi bloquées, les crémaillères 13-15 ne pouvant plus se mouvoir, c'est l'ensemble avec la roue, devenu solidaire de l'arbre 4, qui se met à tourner. De cette manière le pneu à monter ou à démonter est donc entraîné sur toute sa périférie sous ou sur l'outil de montage ou de démontage 34, jusqu'à ce que le pneu soit monté sur la roue ou démonté de celle-ci.

Quand la roue doit être dégagée, on fait tourner le motoréducteur électrique en sens inverse, au moyen de la pédale 2 actionnée dans une autre direction, de sorte que les crémaillères 13-15 et les griffes 14-17 se déplacent vers l'extérieur et libèrent la roue.

**Revendications**

1. Mécanisme pour la fixation d'une roue dans un dispositif pour le montage et le démontage d'un pneu sur et d'une jante de roue, lequel mécanisme est pourvu d'un pignon central (12) commandé en rotation, pignon sur lequel s'engrènent au moins trois cremaillères (13-15) dont l'extrémité extérieure de chacune est pourvue d'une griffe (14-17) pour la fixation de la roue, caractérisé par le fait qu'au moins deux desdits crémaillères (13-15) s'engrènent sur le pignon central (12) des niveaux différents par rapport à l'axe du pignon central (12).

2. Mécanisme selon la revendication 1, caractérise par le fait qu'à chaque niveau s'engrènent deux crémaillères (13) parallèles et diamétralement opposées par rapport au pignon central (12).

3. Mécanisme selon la revendication 2, caractérisé par le fait qu'il y a deux niveaux comportant chacun deux crémaillères parallèles (13-15), chaque paire de crémaillères étant dirigée perpendiculairement l'une à l'autre.

4. Mécanisme selon la revendication 3, caractérisé par le fait que l'extrémité extérieure de chaque crémaillère (13-15) est courbée et pourvue d'une griffe (14-17) de sorte que l'axe de déplacement de celle-ci soit radial et parallèle à sa crémaillère.

5. Mécanisme selon la revendication 4, caractérisé par le fait que les quatre crémaillères (13-15) sont recouvertes d'une table (25) à quatre rainures radiales (26) prévues pour le guidage des quatre griffes (14-17) des crémaillères, laquelle table (25) est supportée au moyen de montants (27) par un disque de glissement (20) monté librement autour de l'arbre de commande (4) du pignon (12) et qu'entre la table (25) et le disque de glissement (20) il est prévu pour chaque crémaillère (13-15) un guide (29) pour le guidage de ces crémaillères pendant leur déplacement.

6. Mécanisme selon la revendication 5, caractérisé par le fait qu'entre les crémaillères inférieures (15) et le disque de glissement (20) et autour de l'arbre (4), il est placé un disque-porteur (18) et un disque de friction (19) et qu'entre ledit disque de glissement (20) et un collet (8) monté sur la caisse (1) du dispositif, il est prévu un deuxième disque de friction (21).

7. Mécanisme selon la revendication 6, caractérisé par le fait que les deux disques de friction (19-21) sont en une matière plastique, de préférence en polyuréthane.

**Patentansprüche**

1. Mechanismus zur Befestigung eines Rades in einer Vorrichtung für die Montage bzw. Demontage eines Reifens auf bzw. aus einer Radfelge, wobei dieser Mechanismus mit einem drehend angetriebenen Zentralritzel (12) ausgestattet ist, mit dem wenigstens drei Zahnstangen (13-15) im Eingriff stehen, deren Aussenende jeweils mit einem Griff (14-17) für die Befestigung des Rades versehen ist, dadurch gekennzeichnet, dass wenigstens zwei der vorgenannten Zahnstangen (13-15) im Eingriff mit dem Zentralritzel (12), in verschiedenen Höhen in Bezug auf die Achse desselben, stehen.

2. Mechanismus gemäss dem Anspruch 1, dadurch gekennzeichnet, dass in jeder Höhe zwei gleichlaufende, einander diametral in Bezug auf das Zentralritzel (12) gegenüberstehende Zahnstangen (13) miteinander im Eingriff stehen.

3. Mechanismus gemäss dem Anspruch 2, dadurch gekennzeichnet, dass es zwei Höhen gibt, wobei in jeder Höhe zwei gleichlaufende Zahnstangen (13-15) vorgesehen sind, derart, dass die Zahnstangenpaares senkrecht zu einander stehen.

4. Mechanismus gemäss dem Anspruch 3, dadurch gekennzeichnet, dass das Aussenende einerjeden Zahnstange (1315) gekrümmt ist und mit einem Griff (14-17) versehen ist, derart, dass die Verschiebungsachse desselben radial in Bezug auf die entsprechende Zahnstange und gleichlaufend mit ihr angeordnet ist.

5. Mechanismus gemäss dem Anspruch 4, dadurch gekennzeichnet, dass die vier Zahnstangen (13-15) mit einem Tisch (25) überdeckt sind, der vier Radialnuten (26) für die Führung der vier Griffe (14-17) der Zahnstangen aufweist, wobei dieser Tisch (25) mittels Ständer (27) durch eine um die Antriebswelle (4) des Ritzels (12) frei bewegliche Gleitscheibe (20) getragen wird und dass zwischen diesem Tisch (25) und dieser Gleitscheibe (20) für jede Zahnstange (13-15) eine Führungsvorrichtung (29) fürdie Führung dieser Zahnstangen während ihrer Bewegung vorgesehen ist.

6. Mechanismus gemäss dem Anspruch 5, dadurch gekennzeichnet,dass zwischen den unteren Zahnstangen (15) und der Gleitscheibe (20), sowie um die Welle (4), eine Tragscheibe (18) und eine Reibscheibe (19) angeordnet sind und zwischen dieser Gleitscheibe (20) und einem auf dem Gestell (1) der Vorrichtung montierten Kragen (8) eine zweite Reibscheibe (21) vorgesehen ist.

7. Mechanismus gemäss dem Anspruch 6, dadurch gekennzeichnet, dass die beiden vorgenannten Reibscheiben (19-21) aus einem geeigneten Kunststoff, vorzugsweise aus Polyurethan, hergestellt sind.

**Claims**

1. Mechanism for the attachment of a wheel in a device for the fitting and removal of a tyre onto and from a wheel, which mechanism is provided ith a central pinion (12) the rotation of which is controlled, on which pinion engage at least three racks (13-15) the outer ends of which are provided with a hook (14-17) for holding the wheel, characterized by the fact that at least two of said racks (13-15) engage on the central pinion (12) at different levels with respect to the axis of the central pinion (12).

2. Mechanism according to claim 1, characterized by the fact that two racks (13) which are parallel and diametrically opposite with respect to the pinion (12) engage at each level.

3. Mechanism according to claim 2, characterized by the fact that there are two levels each comprising two parallel racks (13-15), each pair of racks being directed perpendicularly towards one another.

4. Mechanism according to claim 3, characterized by the fact that the outer extremity of each rack (13-15) is curved and provided with a hook (14-17) so that the axis of movement of the latter is radial and parallel to its rack.

5. Mechanism according to claim 4, characterized by the fact that the four racks (13-15) are covered by a table (25) provided with four radial grooves (26) for guiding the four hooks (14-17) of the racks, which table (25) is supported by means of uprights (27) by a slipping disk (20) freely mounted about the shaft (4) of the pinion (12) and that between the table (25) and the slipping disk (20) a guide (29) is provided for each rack (13-15) for guiding these racks during their movement.

6. Mechanism according to claim 5, characterized by the fact that between the lower racks (15) and the slipping disk (20) and around the shaft (4), a bearing disk (18) and a friction disk (19) are disposed and that between said slipping disk (20) and a collar (8) mounted on the housing (1) of the device, a second friction disk (21) is provided.

7. Mechanism according to claim 5, characterized by the fact that the two friction disks (19-21) are made of a plastic material, preferably polyurethane.

Fig.1

Fig.2

EP 0 167 195 B1

Fig. 3

3